# EUROPÄISCHE PATENTANMELDUNG

(11) **EP 3 118 018 A1**
(43) Veröffentlichungstag der Anmeldung: **18.01.2017**
(21) Anmeldenummer: 16001512.9
(22) Anmeldetag: 07.07.2016
(51) Int. Cl.: B60B 27/00, B60B 27/02

(54) **NABE FÜR EIN FAHRRAD**

(30) Priorität: 13.07.2015 DE 102015009041
(71) Anmelder: SRAM Deutschland GmbH, 97424 Schweinfurt (DE)
(72) Erfinder: Braedt, Henrik, 97456 Dittelbrunn/OT Hambach (DE)

(57) **Zusammenfassung**

Die vorliegende Erfindung betrifft eine Nabe für ein Fahrrad mit einer Nabenachse, einer Nabenhülse, die über eine Lageranordnung drehbar auf der Nabenachse gelagert ist, einem Antreiber, der drehbar über eine Lageranordnung auf der Nabenachse gelagert und mit der wenigstens einen Nabenhülse drehmomentübertragend koppelbar ist, wobei die Lageranordnung wenigstens ein axial inneres Lager und wenigstens ein axial äußeres Lager aufweist. Erfindungsgemäß ist dabei vorgesehen, dass wenigstens ein Befestigungselement vorgesehen ist, das durch eine lokale oder abschnittsweise Vergrößerung des Querschnitts der Nabenachse wenigstens das innere Lager der Lageranordnung in seiner vorbestimmten Position an der Nabenachse festlegt.

## Beschreibung

Die vorliegende Erfindung betrifft eine Nabe für ein Fahrrad mit einer Nabenachse, wenigstens einer Nabenhülse, die über eine Lageranordnung drehbar auf der Nabenachse gelagert ist, einem Antreiber, der drehbar über eine Lageranordnung auf der Nabenachse gelagert und mit der wenigstens einen Nabenhülse drehmomentübertragend koppelbar ist, wobei die Lageranordnung wenigstens ein inneres Lager und wenigstens ein äußeres Lager aufweist.

Derartige Fahrradnaben sind aus dem Stand der Technik bekannt und beispielsweise in DE 10 2012 016 949 A1 offenbart. Dieses Dokument offenbart eine Nabe mit einem Nabenkörper und einer Antriebseinrichtung. Der Nabenkörper ist über Lager gegenüber einer feststehenden Achse drehbar aufgenommen. Die Antriebseinrichtung ist gegenüber der feststehenden Achse ebenfalls über Lager drehbar gelagert. Zwischen den Lagern zur Lagerung der Antriebseinrichtung ist eine Distanzhülse vorgesehen, die die Klemmkraft von dem Lagerinnenring des einen Lagers auf den Lagerinnenring des anderen Lagers überträgt.

DE 10 2012 016 945 A1 offenbart eine Nabe mit einem über Lager drehbar gegenüber einer feststehenden Nabenachse gelagerten Nabenkörper. Eine Antriebseinrichtung ist ebenfalls über Lager drehbar gegenüber der Nabenachse gelagert. Zwischen diesen Lagern bzw. zwischen den Lagerinnenringen dieser Lager ist eine Distanzhülse vorgesehen.

Bei den voranstehend beschriebenen Dokumenten des Standes der Technik werden die Lager über Distanzhülsen positioniert und eine axiale Klemmkraft von einem Lagerinnenring über eine Distanzhülse auf den Lagerinnenring des jeweils nächsten Lagers übertragen. Da zwischen den Lagerinnenringen und der Nabenachse ein (radiales) Spiel vorliegt, können aufgrund der erhöhten Reibung der Lager Verschleißerscheinungen an den Lagern und der Achse auftreten.

Es ist eine Aufgabe der vorliegenden Erfindung eine Nabe bereitzustellen, bei der die Lager schnell und einfach montiert und Verschleißerscheinungen an der Nabenachse und den Lagern verhindert werden können.

Diese Aufgabe wird mit einer Nabe mit den Merkmalen des Patentanspruchs 1 gelöst.

Weitere Ausführungsformen der Erfindung sind in den beigefügten abhängigen Ansprüchen angegeben.

Gemäß der Erfindung weist die Nabe wenigstens ein Befestigungselement auf. Das wenigstens eine Befestigungselement legt durch eine lokale oder abschnittsweise Vergrößerung des Querschnitts der Nabenachse wenigstens das in axialer Richtung innere Lager der Lageranordnung in seiner vorbestimmten Position an der Nabenachse fest.

Bei der erfindungsgemäßen Nabe können die Lager mit einer montagefreundlichen Spielpassung zwischen der Nabenachse und dem Innenring der Lager auf die Achse aufgesteckt werden. Im Anschluss daran wird zumindest das innere Lager der Lageranordnung über das Befestigungselement bzw. die von dem wenigstens einen Befestigungselement erzeugte lokale oder abschnittsweise Vergrößerung des Querschnitts der Nabenachse in seiner vorbestimmten Position an der Nabenachse festgelegt. Bei der erfindungsgemäßen Nabe kann dementsprechend auf Distanzhülsen und ähnliches zur Einstellung des axialen Abstands zwischen den Lagerinnenringen der Lager einer Lageranordnung verzichtet werden.

Die erfindungsgemäße Nabe erlaubt eine schnelle und einfache Montage der Lageranordnung, ohne dass es dabei aufgrund von Anwenderfehlern zu einer Fehlpositionierung der Lager kommen kann.

Bei einer Festlegung zumindest des inneren Lagers der Lageranordnung in seiner vorbestimmten Position über das wenigstens eine Befestigungselement, das den Verzicht auf Distanzhülsen möglich macht, kann sich der Abstand zwischen den Lagern in axialer Richtung nicht verändern, da beispielswiese keine Distanzhülsen aufgrund der Klemmkraft komprimiert werden können. Der axiale Abstand der beiden Lager der Lageranordnung bzw. der Abstand zwischen den beiden Innenringen der Lager wird somit nicht verändert oder verkürzt. Somit können Lagerschäden aufgrund einer Verkürzung des Lagerinnenringabstands vermieden werden.

Gemäß einer Ausführungsform der Erfindung kann das wenigstens eine Befestigungselement eine Presspassung zwischen der Nabenachse und dem wenigstens einen inneren Lager erzeugen. Anders ausgedrückt kann über das wenigstens eine Befestigungselement eine Spielpassung zwischen den Lagern und der Nabenachse, die montage- und toleranzfreundlich ist, in einen Presssitz zwischen wenigstens dem inneren Lager und der Nabenachse umgewandelt werden, der eine dauerhafte Positionierung des inneren Lagers in seiner vorbestimmten Position gewährleistet.

Das wenigstens eine Befestigungselement kann derart ausgebildet sein, dass es eine entlang der Nabenachse wirkende Kraft in eine radiale Vergrößerung des Querschnitts der wenigstens einen Nabenachse umsetzt. Dementsprechend kann auf das wenigstens eine Befestigungselement eine in axialer Richtung wirkende Kraft ausgeübt werden, die von dem wenigstens einen Befestigungselement in eine lokale bzw. abschnittsweise Vergrößerung des Querschnitts der Nabenachse in radialer Richtung umgewandelt wird. Diese radiale Vergrößerung des Querschnitts der Nabenachse dient zur Festlegung wenigstens des inneren Lagers in seiner vorbestimmten Position an der Nabenachse.

Das wenigstens eine Befestigungselement kann in axialer Richtung bewegbar in der Nabenachse aufgenommen sein. Das wenigstens eine Befestigungselement kann im Wesentlichen rohrförmig ausgebildet sein. Das rohrförmige Befestigungselement kann sich mit seinem Außenumfang entlang des Innenumfangs der Nabenachse erstrecken.

Das wenigstens eine Befestigungselement kann derart ausgebildet sein, dass es über wenigstens ein Verschlusselement in axialer Richtung in der Nabenachse verspannbar ist. Das wenigstens eine Verschlusselement kann eine in axialer Richtung wirkende Kraft auf das wenigstens eine Befestigungselement ausüben. Diese in axialer Richtung wirkende Kraft kann von dem wenigstens einen Befestigungselement in eine Vergrößerung des Querschnitts in radialer Richtung umgesetzt werden. Das wenigstens eine Verschlusselement kann zur Sicherung des wenigstens einen Antreibers und/oder des axial äußeren Lagers der Lageranordnung an der Nabenachse dienen. Das wenigstens eine Befestigungselement kann mit einem seiner axialen Enden mit dem wenigstens einen Verschlusselement in Kontakt stehen.

Gemäß einer Ausführungsform kann die Nabenachse an wenigstens einem Abschnitt ihrer Innenumfangsfläche eine vorbestimmte Kontur aufweisen. Die vorbestimmte Kontur kann mit dem wenigstens einen Befestigungselement zum Festlegen wenigstens des inneren Lagers beispielsweise formschlüssig zusammenwirken. Das wenigstens eine Verschlusselement kann das wenigstens eine Befestigungselement zwischen sich und der wenigstens einen vorbestimmten Kontur verspannen, sodass auf diese Weise die Vergrößerung des Querschnitts der wenigstens einen Nabenachse erzeugt werden kann. Das wenigstens eine Befestigungselement kann wenigstens einen Abschnitt aufweisen, der korrespondierend d. h. zumindest abschnittsweise formschlüssig zu der Kontur an der Innenumfangsfläche der Nabenachse ausgebildet ist. Der wenigstens eine Abschnitt kann beispielsweise ein Endabschnitt des wenigstens einen Befestigungselements sein. Der Endabschnitt kann sich an einen rohrförmigen Abschnitt des wenigstens einen Befestigungselements anschließen und dem axialen Ende des Befestigungselements entgegengesetzt sein, das mit dem wenigstens einen Verschlusselement in Kontakt bringbar ist.

Der wenigstens eine Abschnitt des Befestigungselements, der zu der Kontur an der Innenumfangsfläche korrespondierend ausgebildet ist, kann eine geneigte Anlagefläche aufweisen. Die geneigte Anlagefläche kann mit der wenigstens einen Kontur an der Innenumfangsfläche zum Vergrößern des Querschnitts der Nabenachse zusammenwirken.

Der Abschnitt mit der geneigten Anlagefläche kann den Querschnitt des wenigstens einen Befestigungselements in radialer Richtung verengen. Der wenigstens eine Abschnitt kann dementsprechend konisch ausgebildet sein.

Gemäß einer Ausführungsform kann die vorbestimmte Kontur an der Innenumfangsfläche der Nabenachse ein nach radial innen vorstehender Vorsprung mit einer geneigten Gegenanlagefläche sein. Die Gegenanlagefläche kann mit der Anlagefläche an dem wenigstens einen Befestigungselement zum Vergrößern des Querschnitts der Nabenachse zusammenwirken. Dazu kann die Anlagefläche des wenigstens einen Befestigungselements mit der Gegenanlagefläche des Vorsprungs an der Nabenachse in Kontakt gebracht werden. Das wenigstens eine Verschlusselement kann das wenigstens eine Befestigungselement mit seiner Anlagefläche gegen die Gegenanlagefläche in axialer Richtung verspannen, wodurch die Vergrößerung des Querschnitts der Nabenachse und damit die Festlegung des inneren Lagers in seiner vorbestimmten Position bewirkt wird. Der Abschnitt des wenigstens einen Befestigungselements mit der geneigten Anlagefläche kann eine vergrößerte Wandstärke aufweisen. Um die Vergrößerung des Querschnitts der Nabenachse bewirken zu können, muss das Befestigungselement insbesondere in dem für die Vergrößerung des Querschnitts ausschlaggebenden Abschnitt relativ steif ausgebildet sein. Dies kann mit einer Vergrößerung der Wandstärke in dem Bereich mit der geneigten Anlagefläche erreicht werden.

Gemäß einer Ausführungsform kann das wenigstens eine Befestigungselement im unverspannten Zustand mit einem vorbestimmten Abschnitt in axialer Richtung aus der Nabenachse herausragen. Dieser aus der Nabenachse herausragende Abschnitt des wenigstens einen Befestigungselements kann mit dem wenigstens einen Verschlusselement zum Erzeugen einer für die Vergrößerung des Querschnitts der Nabenachse notwendigen Kraft zusammenwirken. Über den axial herausragenden Abschnitt kann das wenigstens eine Befestigungselement mittels des Verschlusselements in die Nabenachse hineingedrückt werden, um auf diese Weise die Vergrößerung des Querschnitts zu bewirken. Das wenigstens eine Verschlusselement kann das Befestigungselement mit seinem herausragenden Abschnitt beispielsweise gegen den nach radial innen ragenden Vorsprung der Innenumfangsfläche drücken. Das wenigstens eine Befestigungselement wird in diesem Fall in axialer Richtung weiter hinein in die Nabenachse bewegt. Die Anlagefläche an dem wenigstens einen Befestigungselement wandert entlang der wenigstens einen Gegenanlagefläche an dem Vorsprung der Nabenachse.

Das wenigstens eine Befestigungselement kann eine Kante aufweisen, die zum Vergrößern des Querschnitts dient. Die Kante kann zwischen der geneigten Anlagefläche und dem rohrförmigen Abschnitt des Befestigungselements ausgebildet sein. Die Kante kann entlang der Gegenanlagefläche wandern und den Bereich der Gegenanlagefläche nach radial außen drücken. Dies sorgt dann für eine Aufweitung des Querschnitts der Nabenachse und damit für die Festlegung wenigstens des inneren Lagers. Auf diese Weise wird ein Presssitz zwischen der Nabenachse und dem Lagerinnenring wenigstens des inneren Lagers der Lageranordnung erzeugt. Die Aufweitung kann durch die Kante erzeugt werden, die aufgrund der auf das wenigstens eine Befestigungselement ausgeübte Kraft entlang der Gegenanlagefläche des Vorsprungs der Nabenachse wandern kann.

Gemäß einer Ausführungsform der Erfindung kann zwischen der wenigstens einen Nabenhülse und dem Antreiber wenigstens eine Freilaufeinrichtung mit einem mit der Nabenhülse gekoppelten ersten Kupplungsring und einem mit dem Antreiber gekoppelten zweiten Kupplungsring vorgesehen sein. Bei der erfindungsgemäßen Nabe kann es sich dementsprechend um eine Freilaufnabe handeln.

Im Folgenden werden beispielhafte Ausführungsformen der Erfindung mit Bezug auf die beigefügten Figuren beschrieben. Es stellen dar:
- Figur 1: eine achsenthaltende Schnittansicht einer Freilaufnabe gemäß einer ersten Ausführungsform der Erfindung;
- Figur 2: eine Schnittansicht der Nabenachse der Freilaufnabe gemäß Figur 1;
- Figur 3: eine vergrößerte Detailansicht des Details III in Figur 2;
- Figur 4: eine teilweise aufgebrochene perspektivische Ansicht einer Kupplungsvorrichtung gemäß der ersten Ausführungsform der Erfindung;
- Figur 5: eine vergrößerte Ansicht des Ausschnitts V in Figur 4;
- Figur 6: eine teilweise aufgebrochene perspektivische Ansicht der Freilaufnabe gemäß der ersten Ausführungsform der Erfindung;
- Figur 7: eine vergrößerte Ansicht des Ausschnitts VII in Figur 6;
- Figur 8: eine Schnittansicht der Freilaufnabe gemäß der ersten Ausführungsform der Erfindung;
- Figur 9: eine vergrößerte Ansicht des Ausschnitts IX in Figur 8;
- Figuren 10 bis 12: Schnittansichten verschiedener Stellungen der Freilaufeinrichtung der Freilaufnabe gemäß der ersten Ausführungsform der Erfindung beim Übergang aus der Eingriffsstellung in die Freigabestellung;
- Figuren 13 bis 15: vergrößerte Ansichten der von dem Entkopplungsring und den beiden Kupplungsringen gebildeten Baugruppe beim Übergang aus der Eingriffsstellung in die Freilaufstellung;
- Figur 16: eine Vorderansicht einer Freilaufnabe gemäß einer zweiten Ausführungsform der Erfindung;
- Figur 17: eine Schnittansicht der Freilaufnabe gemäß der zweiten Ausführungsform der Erfindung;
- Figur 18: eine weitere Schnittansicht der Freilaufnabe gemäß der zweiten Ausführungsform der Erfindung; und
- Figur 19: ein Diagramm des Verlaufs der Anziehungskraft.

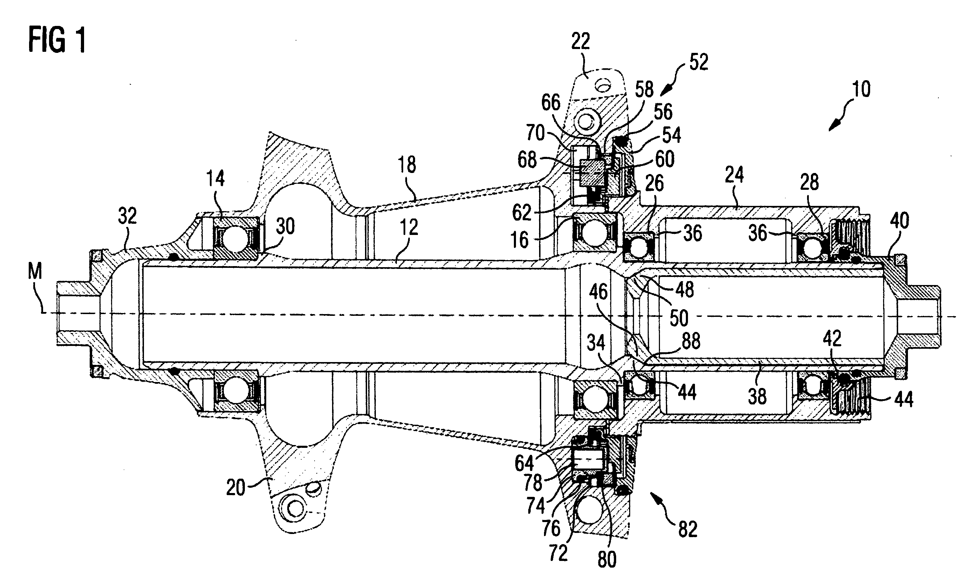

In Figur 1 ist eine achsenthaltende Schnittansicht der Freilaufnabe gemäß einer ersten Ausführungsform der Erfindung gezeigt, wobei die Freilaufnabe allgemein mit 10 bezeichnet ist. Die Längsachse der Freilaufnabe 10 ist allgemein mit M bezeichnet. Die Freilaufnabe 10 umfasst eine Nabenachse 12, in die eine nicht gezeigte Achse mit Schnellspannmechanismen einsteckbar ist, über die die Nabenachse 12 an einem Fahrradrahmen fixierbar ist.

Auf der Nabenachse 12 ist über die beiden Wälzlager 14, 16 eine Nabenhülse 18 drehbar gelagert. Die Nabenhülse 18 weist zwei Speichenflansche 20, 22 auf, an denen Speichen in an sich bekannter Weise anbringbar sind. Ferner ist an der Nabenachse 12 ein Antreiber 24 bzw. eine Antreiberhülse 24 über Wälzlager 26 und 28 drehbar gelagert.

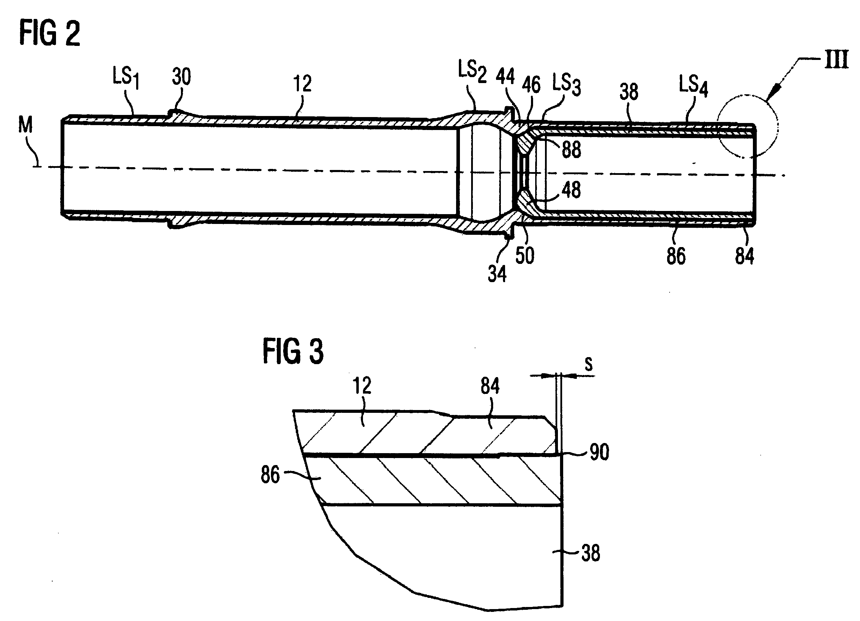

Das Lager 14 stützt sich an einem an der Nabenachse 12 ausgebildeten Vorsprung 30 ab. Das Lager 14 wird über ein Verschlusselement 32, das auf die Nabenachse 12 aufgesteckt ist, gegen den Vorsprung 30 gedrückt. An der Achse 12 ist ein weiterer Vorsprung bzw. eine Stufe 34 ausgebildet. An jeder axialen Seite dieser Stufe 34 stützt sich eines der Lager 16 und 26 ab. An der Antreiberhülse 24 sind nach radial innen vorspringende Vorsprünge 36 vorgesehen, die zum Abstützen bzw. Positionieren der Lager 26 und 28 auf der Nabenachse 12 dienen. In der Nabenachse 12 ist ein in Richtung der Achse M verlagerbares Befestigungselements 38 aufgenommen, das insbesondere dazu dient, das Lager 26 in seiner vorbestimmten Position über eine Presspassung festzulegen. Auf das Befestigungselement 38 und die Nabenachse 12 wird mit Bezug auf Figur 2 nochmals näher eingegangen. Die Antreiberhülse 24 wird mit den Lagern 26 und 28 über Verschlusselemente 40, 42 an der Nabenachse 12 gesichert. Dazu ist das Verschlusselement 40 auf die Nabenachse 12 aufgesteckt und wird mit einem Schnellspanner aufgespannt. An der Antreiberhülse 24 ist ein Abschnitt 44 mit einem Innengewinde erkennbar, der zur Befestigung einer in Figur 1 nicht gezeigten Ritzelanordnung an der Nabenhülse 24 dient.

Wird das Verschlusselement 40 auf die Nabenachse 12 aufgesteckt, wird das Befestigungselement 38 entlang der Achse M zu einem nach radial innen vorstehenden Vorsprung 46 an der Nabenachse 12 verlagert bzw. gegen diesen Vorsprung gepresst. Der Vorsprung 44 weist eine geneigt bzw. schräg zu der Achse M verlaufende Anlagefläche 46 auf, die im Wesentlichen zu dem Verschlusselement 40 zeigt. Das Befestigungselement 38 weist einen Endabschnitt 48 auf, der den Durchmesser des Befestigungselements 38 verengt bzw. einschnürt. Der Endabschnitt 48 ist somit konisch ausgebildet. An diesem Endabschnitt 48 ist eine geneigte Anlagefläche 50 vorgesehen, die mit der Anlagefläche 46 an dem Vorsprung 40 der Nabenachse 12 in Kontakt gebracht werden kann. Die Anlagefläche 46 des Vorsprungs 44 bildet eine Gegenanlagefläche für die Anlagefläche 50 des Befestigungselements 38. Das Befestigungselement 38 wird bei der Verschraubung des Verschlusselements 40 mit der Nabenhülse 12 gegen den Vorsprung 44 bzw. die Anlagefläche 46 verspannt. Das Befestigungselement 38 kann somit eine axial auf das Befestigungselement 38 ausgeübte Kraft in eine radiale Vergrößerung des Querschnitts der Nabenachse 12 umsetzen. Dadurch wird in Abhängigkeit der Neigungswinkel der Anlageflächen 46 und 50 der Querschnitt der Nabenachse 12 abschnittsweise oder auch punktuell in radialer Richtung vergrößert oder aufgeweitet. Durch diese Aufweitung vergrößert sich der Außendurchmesser der Nabenachse. Die Vergrößerung des Durchmessers bzw. des Außendurchmessers der Nabenachse 12 führt dazu, dass eine Presspassung zwischen dem Lager 26 und dem Außenumfang der Nabenachse 12 hergestellt wird. Dadurch wird das Lager 26 in seiner vorbestimmten Position an der Nabenachse 12 in radialer Richtung festgelegt. Das Lager 26 kann sich durch den hergestellten Presssitz nicht lockern und der Abstand zwischen den Lagern 26 und 28 kann dauerhaft festgelegt werden, ohne dass bei der Montage spezielle Maßnahmen zur Einhaltung des Abstands getroffen werden müssen. Insbesondere kann auf die aus dem Stand der Technik bekannten Distanzhülsen zwischen den Lager 26 und 28 verzichtet werden. Durch die dauerhafte Festlegung des Abstands zwischen dem Lager 26 und dem Lager 28 an der Nabenachse werden Lagerschäden und Verschleißerscheinungen an der Achse sowie an den Lagern vermieden.

Zwischen der Antreiberhülse 24 und der Nabenhülse 18 ist die Freilaufeinrichtung 52 erkennbar. Die Freilaufeinrichtung 52 wird über Verschlusselemente 54, die sich zwischen der Nabenhülse 18 und der Antreiberhülse 24 erstrecken, zur Umgebung hin abgeschlossen und auch über einen Dichtungsring 56 abgedichtet. Die Freilaufeinrichtung 52 ist in der Nabenhülse 18 aufgenommen. Die Freilaufeinrichtung 52 umfasst einen ersten Kupplungsring 58 und einen zweiten Kupplungsring 60. Der zweite Kupplungsring 60 ist mit einem Entkopplungsring 62 verbunden. Die Verbindung zwischen dem Entkopplungsring 62 und dem zweiten Kupplungsring 60 kann beispielswiese über eine Rast- oder eine Schnappverbindung hergestellt werden. Der Entkopplungsring 62 kann aus Kunststoff hergestellt sein. Der Entkopplungsring 62 soll verhindern, dass die Kupplungsringe 58 und 60 an der Nabenhülse in axialer Richtung anschlagen. Dieses Anschlagen an der Nabenhülse 18 kann zu unerwünschten Schwingungen und Geräuschentwicklungen führen. Der Entkopplungsring 62 entkoppelt somit die Kupplungsringe 58 und 60 in axialer Richtung schwingungstechnisch bzw. akustisch von der Nabenhülse 18. Der erste Kupplungsring 58 kann mit seinem Innenumfang auf den zweiten Kupplungsring 60 und den Entkopplungsring 62 sowohl in axialer Richtung als auch in Umfangsrichtung relativ bewegt werden. Anders ausgedrückt kann der erste Kupplungsring 58 mit seinem Innenumfang auf dem Entkopplungsring 62 und den zweiten Kupplungsring 60 gleiten. Der Entkopplungsring 62 weist einen nach radial außen vorstehenden Vorsprung 64 auf, über den der erste Kupplungsring 58 an dem Entkopplungsring 62 und dem zweiten Kupplungsring 60 gehalten wird.

Der erste Kupplungsring 58, der zweite Kupplungsring 60 und der Entkopplungsring 62 bilden eine separate Baugruppe, die an der Nabenhülse 18 bewegbar angeordnet ist. Der mit dem Entkopplungsring 62 verbundene zweite Kupplungsring 60 kann sich zusammen mit dem Entkopplungsring 62 in axialer Richtung relativ zu dem ersten Kupplungsring 58 bewegen. Wie voranstehend bereits erwähnt wurde, kann sich auch der erste Kupplungsring 58 relativ zu dem zweiten Kupplungsring 60 und dem Entkopplungsring 62 bewegen.

Der erste Kupplungsring 58 weist gestuft profilierte Durchbrüche 66 auf, in denen Magnete 68 eingesetzt und über die gestufte Profilierung gehalten sind. Die Magnete 68 können zylinderförmig oder stabförmig ausgebildet sein. Die Durchbrüche 66 sind in ihrer Form an die Gestalt der Magnete 68 angepasst. Die Magnete 68 erstrecken sich abschnittsweise in einer Ausnehmung 70 in der Nabenhülse 18. In einer weiteren Ausnehmung 72 in der Nabenhülse 18 sind Führungshülsen 74 aufgenommen, die über ein elastisches Element 76 elastisch in der Ausnehmung 72 der Nabenhülse 18 gelagert sind. Die Führungshülsen 74 können aus einem Material hergestellt sein, das üblicherweise für Gleitlager verwendet wird. In den Führungshülsen 74 sind Magnete 78 aufgenommen. Die Magnete 78 können ebenfalls zylinder- oder stabförmig ausgebildet sein. Der erste Kupplungsring 58 weist eine Ausnehmung 80 zur abschnittsweisen Aufnahme der Führungshülsen 74 auf. Der erste Kupplungsring 58 ist in axialer Richtung verlagerbar an den Führungshülsen 74 gelagert. Die Führung über die Führungshülsen 74 und die Verbindung zwischen dem ersten Kupplungsring 58 und der Nabenhülse 18 über die Führungshülsen 74 sorgt für die akustische Entkopplung zwischen der Freilaufeinrichtung 52 und der Nabenhülse 18 in axialer und radialer Richtung, da über die Führungshülsen 74 ein vorbestimmter Abstand in radialer Richtung zwischen der Nabenhülse 18 und dem ersten Kupplungsring 58 eingestellt werden kann.

Die Führungshülsen 74 und der Entkopplungsring 62 bilden zusammen eine Entkopplungseinrichtung 82, die die Freilaufeinrichtung 52 schwingungstechnisch von der Nabenhülse 18 entkoppelt. Die Führungshülse 74 und der Entkopplungsring 62 verhindert ein Anschlagen der Kupplungsringe 58, 62 der Freilaufeinrichtung 52 an der Nabenhülse 18 in axialer Richtung. Im Freilaufmodus der Freilaufnabe 10 verhindert insbesondere die Führungshülse 74 ein Anschlagen des ersten Kupplungsrings 58 an der Nabenhülse 18 in radialer Richtung und in Umfangsrichtung.

Figur 2 zeigt eine Schnittansicht der Nabenachse 12 mit dem Befestigungselement 38.

An der Nabenachse 12 sind die nach radial außen ragenden Vorsprünge 30 und 34 erkennbar, die zur Anlage der Lager 14, 16, 26 der Freilaufnabe 10 dienen (siehe Figur 1). In axialer Richtung links neben dem Vorsprung 30 ist ein Lagersitz LS₁ zur Befestigung des Lagers 14 (siehe Figur 1) erkennbar. Links und rechts in axialer Richtung neben dem Vorsprung bzw. der Stufe 34 sind ebenfalls Lagersitze LS₂ und LS₃ erkennbar, die zur Befestigung der Lager 16 und 26 dienen. Ein weiterer Lagersitz LS₄ ist in axialer Richtung links neben einem Presssitzabschnitt 84 erkennbar. Die Nabenachse 12 weist im Bereich der Lagersitze LS₁ bis LS₄ einen leicht vergrößerten Außendurchmesser verglichen mit ihren übrigen Abschnitten auf.

In der Nabenachse 12 ist das Befestigungselement 38 in Richtung der Achse M verlagerbar aufgenommen. Das Befestigungselement 38 weist einen Rohrabschnitt 86 auf, der sich entlang der Innenumfangsfläche der Nabenachse 12 erstreckt. Am Übergang von dem Rohrabschnitt 86 auf den Endabschnitt 48 ist eine Kante 88 ausgebildet, die zusammen mit der Anlagefläche 50 des Befestigungselementes 48 den Querschnitt der Nabenachse 12 im Bereich der Anlagefläche 46 an den Vorsprung 44 der Nabenachse 12 aufweitet. Das Befestigungselement 38 liegt mit seiner schräg zur Achse M verlaufenden Anlagefläche 50 an der schräg zur Achse M verlaufenden Anlagefläche 46 des nach radial innen ragenden Vorsprungs 44 an der Nabenachse 12 an. Der Endabschnitt 48 ist konisch ausgebildet. Verglichen mit der übrigen Wandstärke des Befestigungselements 38 in dem Rohrabschnitt 86 weist der Endabschnitt 48 eine vergrößerte Wandstärke auf. Diese vergrößerte Wandstärke und die damit einhergehende größere Steifigkeit des Endabschnitts 48 sorgt dafür, dass über den Endabschnitt 48 der Außenumfang der Nabenhülse 12 im Bereich des Lagersitzes LS₃ vergrößert werden kann. Wird über das Verschlusselement 40 eine in axialer Richtung wirkende Kraft auf das Befestigungselement 38 ausgeübt, wird das Befestigungselement 38 mit seiner Anlagefläche 50 gegen die Gegenlagefläche 46 des Vorsprungs 44 gedrückt. Aufgrund der axialen Kraft wandert das Befestigungselement 38 mit seinem konischen Endabschnitt 48 bzw. der Anlagefläche 50 in axialer Richtung entlang der Gegenanlagefläche 46. Sobald die Kante 86 des Befestigungselements 38 den Bereich der Gegenanlagefläche 46 erreicht, wird der Querschnitt der Nabenachse 12 im Bereich des Lagersitzes LS₃ in radialer Richtung aufgeweitet. Dadurch wird ein Presssitz zwischen der Lagerachse 12 und dem Innenring des Lagers 26 erzeugt.

Figur 3 zeigt eine vergrößerte Ansicht des Ausschnitts III in Figur 2.

In Figur 3 ist erkennbar, dass das Befestigungselement 38 in unbelastetem Zustand mit einem Abschnitt 90 um eine vorbestimmte Distanz s in axialer Richtung aus der Nabenachse 12 vorsteht. Dies ist notwendig, damit über das Verschlusselement 40 (siehe Figur 1) eine axiale Kraft auf das Befestigungselement 38 ausgeübt werden kann, mit der das Befestigungselement 38 in axialer Richtung gegen den Vorsprung 44 an der Innenumfangsfläche der Nabenachse 12 gedrückt wird. Die über das Verschlusselement 40 auf das Befestigungselement 38 ausgeübte Kraft wird über den Endabschnitt 48 des Befestigungselements 38 mit seiner Gegenanlagefläche 50 auf die Anlagefläche 46 des Vorsprungs 44 übertragen, und in eine radiale Aufweitung des Umfangs der Nabenachse 12 im Bereich des Lagersitzes LS₃ umgesetzt.

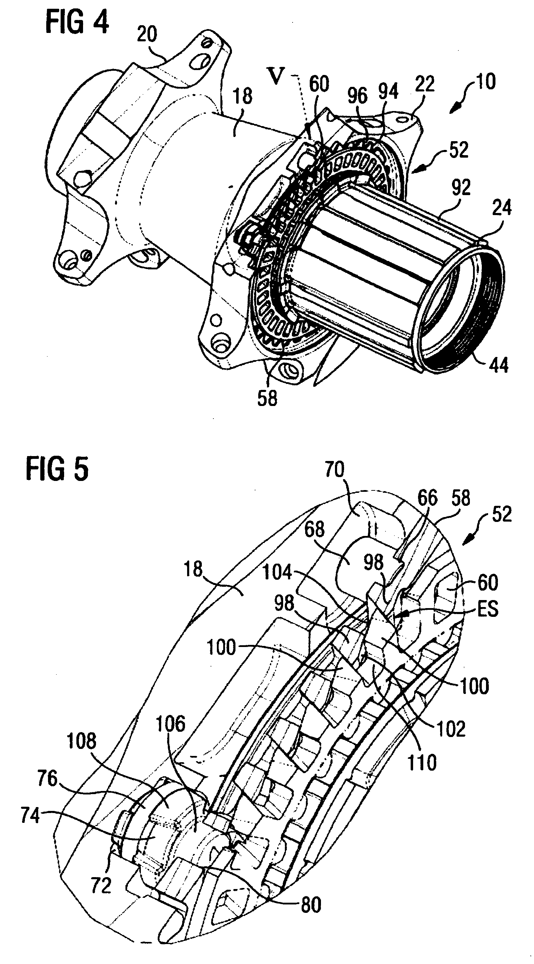

Figur 4 zeigt eine teilweise aufgebrochene Ansicht der Freilaufnabe 10.

Die Nabenhülse 18 weist die Speichenflansche 20 und 22 auf. Zwischen der Nabenhülse 18 und der Antreiberhülse 24 ist die Freilaufeinrichtung 52 gezeigt, die im Bereich des Speichenflansches 22 in der Nabenhülse 18 vorgesehen ist.

An der Antreiberhülse 24 sind nach radial außen vorspringende Vorsprünge 92 erkennbar, die ein Aufschieben einer Ritzelanordnung (nicht gezeigt) in axialer Richtung ermöglichen. Ferner ist in Figur 4 der Innengewindeabschnitt 44 erkennbar, der zur Befestigung einer Ritzelanordnung (nicht gezeigt) vorgesehen ist.

Der erste Kupplungsring 58 und der zweite Kupplungsring 60 sind ebenfalls in Figur 4 erkennbar. An dem ersten Kupplungsring 58 ist eine radiale Außenverzahnung 94 vorgesehen und die Nabenhülse 18 weist eine korrespondierende radiale Innenverzahnung 96 auf.

Figur 5 zeigt eine vergrößerte Ansicht des Ausschnitts V in Figur 4.

In Figur 5 ist die Freilaufeinrichtung 52 erkennbar. Die Freilaufeinrichtung 52 umfasst den ersten Kupplungsring 58 und den zweiten Kupplungsring 60. Sowohl der erste Kupplungsring 58 als auch der zweite Kupplungsring 60 weisen einander entgegen gerichtete axiale Verzahnungen auf. Die axiale Verzahnung des ersten Kupplungsrings 58 weist die axialen Zähne 98 auf. Die Axialverzahnung des zweiten Kupplungsrings 60 weist die axialen Zähne 100 auf. Die Zähne 98 und 100 weisen jeweils Gleitflächen 102 und 104 auf, an denen die Zähne 98 und 100 aneinander abgleiten können, sobald eine Relativverdrehung zwischen dem ersten Kupplungsring 58 und dem zweiten Kupplungsring 60 stattfindet. Gemäß Figur 5 befindet sich die Freilaufeinrichtung 52 in ihrer Eingriffsstellung, d. h. der erste Kupplungsring 58 und der zweiten Kupplungsring 60 stehen in drehmomentübertragendem Eingriff miteinander. Dies ist insbesondere an den mit dem Pfeil ES gekennzeichneten Stellen erkennbar, die die Zähne 98 des ersten Kupplungsrings 58 im Eingriff mit den Zähnen 100 des zweiten Kupplungsrings 60 zeigen.

Der erste Kupplungsring 58 weist Durchbrüche 66 zur Aufnahme von Magneten 68 auf. Die Magnete 68 erstrecken sich abschnittsweise in einer Ausnehmung 70 in der Nabenhülse 18.

Der erste Kupplungsring 58 weist ferner eine weitere Ausnehmung 80 zur Aufnahme eines Führungsabschnitts 106 der Führungshülse 74 auf. An den Führungsabschnitt 106 schließt sich der Befestigungsabschnitt 108 der Führungshülse 74 an. Der Befestigungsabschnitt 108 ist über ein elastisches Element 76 elastisch in der Ausnehmung 72 in der Nabenhülse 18 aufgenommen. Das elastische Element 76 kann beispielsweise ringförmig ausgebildet sein.

Der zweite Kupplungsring 60 weist ferner Ausnehmungen 110 auf, die in Umfangsrichtung verteilt an dem Kupplungsring 60 vorgesehen sind.

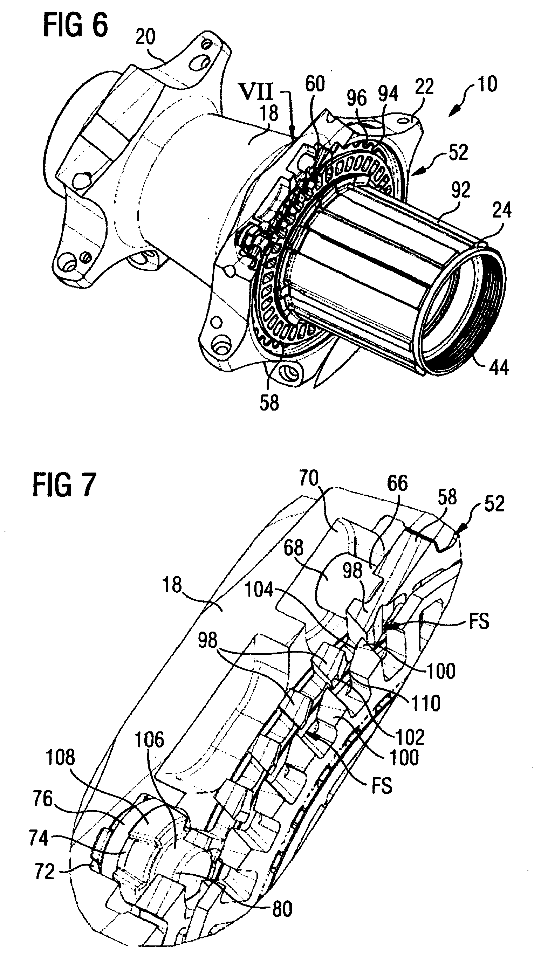

Figur 6 zeigt wiederum eine teilweise aufgebrochene perspektivische Ansicht der Kupplungsvorrichtung 10, die im Wesentlichen der voranstehend beschriebenen Figur 4 entspricht. Die wesentlichen Unterschiede zwischen Figur 4 und Figur 6 sind im Ausschnitt VII erkennbar. Auf den Ausschnitt VII wird im Folgenden mit Bezug auf Figur 7 im Detail eingegangen.

Figur 7 zeigt eine vergrößerte Ansicht der Ausschnitts VII in Figur 6.

Der wesentliche Unterschied zwischen dem in Figur 7 gezeigten Ausschnitt VII und den in Figur 6 gezeigten Ausschnitt VI liegt darin, dass zwischen dem ersten Kupplungsring 58 und dem zweiten Kupplungsring 60 eine Relativverdrehung stattgefunden hat. Durch diese Relativverdrehung wurden der erste Kupplungsring 58 und der zweite Kupplungsring 60 separiert und befinden sich gemäß Figur 7 nun in der Freilaufstellung wie insbesondere an den durch die Pfeile FS gekennzeichneten Stellen erkennbar ist.

Die Zähne 98 des ersten Kupplungsrings 58 und die Zähne 100 des zweiten Kupplungsrings 60 stehen nicht mehr in Eingriff miteinander, sodass sich die Freilaufnabe im Freilaufmodus befindet, in dem eine Relativdrehung zwischen der Nabenhülse 18 mit dem daran angebrachten Laufrad und der Antreiberhülse 24 stattfinden kann. Im Freilaufmodus dreht sich zumeist die Nabenhülse 18 mit dem daran angebrachten Laufrad schneller als die Antreiberhülse 24.

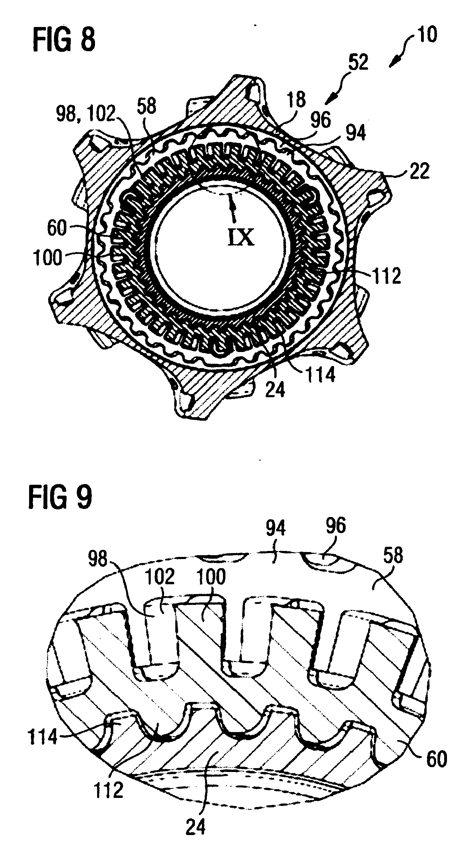

Figur 8 zeigt eine Schnittansicht der Freilaufnabe 10.

In Figur 8 sind die Radialverzahnungen 94 und 96 des ersten Kupplungsrings 58 und der Nabenhülse 18 erkennbar, die in Antriebsrichtung miteinander in drehmomentübertragenden Eingriff stehen. Die Zähne 100 des zweiten Kupplungsrings 60 stehen in Eingriff mit den Zähnen 98 des ersten Kupplungsrings 58. Von den Zähnen 98 des ersten Kupplungsrings 58 sind lediglich Ausschnitte der Gleitflächen 102 erkennbar. Der zweite Kupplungsring 60 weist eine Radialverzahnung 112 auf, die mit einer Radialverzahnung 114 an der Antreiberhülse 24 in drehmomentübertragenden Eingriff steht. Die Radialverzahnung 94 des ersten Kupplungsrings 58 und die Radialverzahnung 96 der Nabenhülse 18 sind in Umfangsrichtung schwingungstechnisch voneinander entkoppelt. Dazu wird im Freilaufmodus ein Luftspalt zwischen den Radialverzahnungen 94 und 96 eingestellt. Dieser Luftspalt wird von den in Figur 8 nicht gezeigten Führungshülsen eingestellt. In Antriebsrichtung liegen die Zähne der Radialverzahnungen 94 und 96 zur Drehmomentübertragung aneinander an, wie in Figur 8 erkennbar ist.

Figur 9 zeigt eine vergrößerte Ansicht des Ausschnitts IX in Figur 8.

Die Zähne 100 des zweiten Kupplungsrings 60 stehen mit den Zähnen 98 des ersten Kupplungsrings 58 in Eingriff. Die Radialverzahnungen 112 und 114 der Antreiberhülse 24 und des zweiten Kupplungsrings 60 stehen ebenfalls in drehmomentübertragenden Eingriff miteinander.

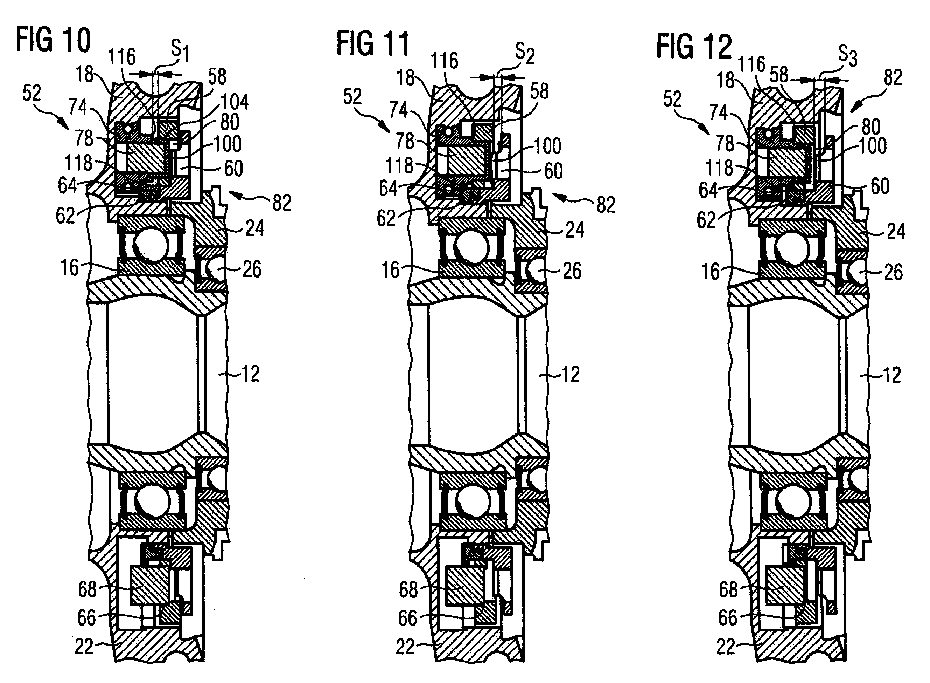

Im Folgenden wird mit Bezug auf die Figuren 10 bis 12 die Überführung der Freilaufeinrichtung 52 aus der Eingriffsstellung in die Freilaufstellung beschrieben.

Figur 10 zeigt die Freilaufeinrichtung 52 bzw. die Freilaufnabe in der Eingriffsstellung, d. h. die Kupplungsringe 58 und 60 stehen in drehmomentübertragenden Eingriff miteinander. An der Führungshülse 74 bzw. deren Führungsabschnitt 104 ist ein Absatz 116 ausgebildet. Zwischen diesem Absatz 116 und dem ersten Kupplungsring 58 stellt sich in der Eingriffsstellung der Kupplungsringe 58 und 60 ein vorbestimmter Spalt S₁ ein. In der Eingriffsstellung liegt der Entkopplungsring 62, der mit dem zweiten Kupplungsring 60 verbunden ist, an einer Anlagefläche 118 der Führungshülse 74 an. Der Entkopplungsring 62 gleitet mit seinem Innenumfang auf der Nabenhülse 18.

In der in Figur 10 gezeigten Stellung ist nur der Magnet 68 "aktiv". Das heißt, nur die Anziehungskraft des Magnets 68 wirkt auf die Kupplungsringe 58 und 60.

Um die Überführung aus der Eingriffsstellung in die Freilaufstellung der Freilaufeinrichtung auszulösen, muss eine Relativbewegung bzw. Relativverdrehung zwischen der Nabenhülse 18 und der Antreiberhülse 24 erfolgen. Durch diese Relativverdrehung zwischen der Nabenhülse 18 und der Antreiberhülse 24 können die Kupplungsringe 54 und 60 voneinander getrennt werden.

Figur 11 zeigt eine Zwischenstellung der Freilaufeinrichtung 52 zwischen der Eingriffsstellung und der Freilaufstellung. In dieser Zwischenstellung überlappen sich die Zähne der Kupplungsringe 58 und 60 noch bis zu einem bestimmten Grad.

In Figur 11 wurde der Spalt S₁ (Figur 10) geschlossen und der erste Kupplungsring 58 liegt an dem Absatz 116 an. Der Entkopplungsring 62 liegt noch immer an der Anlagefläche 118 an. Der erste Kupplungsring 58 hat sich dementsprechend verglichen mit Figur 10 nach links bewegt, um mit dem Absatz 116 in Anlage zu gelangen. Die Verlagerung des ersten Kupplungsrings 58 nach links zur Anlage an dem Absatz 118 an der Führungshülse 74 entsteht durch die Relativbewegung zwischen dem ersten Kupplungsring 58 und dem zweiten Kupplungsring 60 bei der die Gleitflächen 102 und 104 der Zähne 98 und 100 der Kupplungsringe 58 und 60 aneinander abgleiten (Figuren 4 bis 7). Durch diese Gleitbewegung wird der erste Kupplungsring 58 nach links verlagert, da der zweite Kupplungsring 60 aufgrund der Anziehungskraft der Magnete 78 in der Führungshülse 74 über den Entkopplungsring 62 in Anlage mit der Anlagefläche 118 der Führungshülse 74 gehalten wird. Die Bewegung des ersten Kupplungsrings 58 nach links findet gegen die Anziehungskraft der Magnete 68 in dem ersten Kupplungsring 58 statt, da die Magnete 68 mit ihrer Anziehungskraft versuchen, die Kupplungsringe 58 und 60 aneinander zu ziehen. Durch die Bewegung des ersten Kupplungsrings 58 nach links wird zwischen dem ersten Kupplungsring 58 und dem zweiten Kupplungsring 60 ein Spalt S₂ eingestellt, d. h. die Kupplungsringe 58 und 60 sind in axialer Richtung bereits teilweise getrennt.

Figur 12 zeigt die Freilaufeinrichtung 52 in der Freilaufstellung, d. h. der erste Kupplungsring 58 und der zweite Kupplungsring 60 befinden sich nicht in drehmomentübertragenden Eingriff.

Verglichen mit Figur 11 hat sich der axiale Abstand zwischen dem ersten Kupplungsring 58 und dem zweiten Kupplungsring 60 weiter vergrößert. In Figur 12 ist der größere Abstand nun mit S₃ bezeichnet. Die Axialverzahnungen 98, 100 des ersten Kupplungsrings 58 und des zweiten Kupplungsrings 60, von denen nur der Zahn 100 des zweiten Kupplungsrings 60 gezeigt ist, sind vollständig voneinander getrennt.

Bei einer vergleichenden Ansicht zwischen Figur 11 und Figur 12 wird erkennbar, dass sich der zweite Kupplungsring 60 mit dem Entkopplungsring 62 relativ zu dem ersten Kupplungsring 58 in Figur 12 nach rechts bewegt hat. Der erste Kupplungsring 58 befindet sich weiterhin an dem Absatz 116 der Führungshülse 74, aber der Entkopplungsring 62 liegt nicht mehr an der Anlagefläche 118 an. Dadurch stellt sich der Abstand s₃ zwischen dem ersten Kupplungsring 58 und dem zweiten Kupplungsring 60 ein.

In den Figuren 10 bis 12 ist ferner der radiale Vorsprung 64 an dem Entkopplungsring 62 erkennbar, der dazu dient, den ersten Kupplungsring 58 an der aus dem zweiten Kupplungsring 60 und dem Entkopplungsring 62 gebildeten Einheit zu halten, und dennoch eine Relativbewegung zwischen dem ersten Kupplungsring 58 und dem zweiten Kupplungsring 60 mit dem Entkopplungsring 62 zuzulassen. Der Vorsprung 64 und der zweite Kupplungsring 60 schließen den ersten Kupplungsring 58 zwischen sich ein.

Ferner ist in den Figuren 10 bis 12 ersichtlich, dass durch die Führungshülse 74 mit ihrem Absatz 116 und der Anlagefläche 116 verhindert wird, dass die Kupplungsringe 58 und 60 direkt an der Nabenhülse 18 beim Übergang in die Freilaufstellung und auch zurück in die Eingriffsstellung anschlagen können. Hierzu wirkt die Führungshülse 74 auch mit dem Entkopplungsring 62 zusammen, der sich an der Anlagefläche 118 abstützen kann. Auf diese Weise wird verhindert, dass beim Übergang der Kupplungsringe in die Freilaufstellung oder zurück in die Eingriffsstellung entstehenden Schwingungen oder Vibrationen auf die Nabenhülse 18 übertragen werden können.

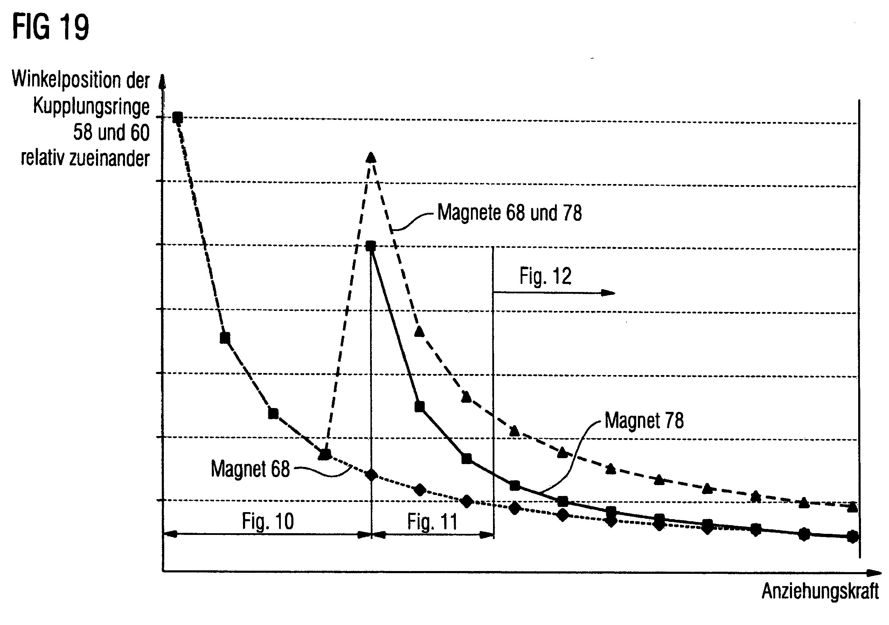

Figur 19 zeigt ein Diagramm der sich in Abhängigkeit der Winkelpositionen der Kupplungsringe 58 und 60 verändernden Anziehungskräfte der Magnete 68 und 78.

Die einzelnen in Figur 19 gezeigten Kurven können den Anziehungskräften des Magnets 68, des Magnets 78 sowie beiden Magneten 68 und 78 in Abhängigkeit der in den Figuren 10 bis 12 gezeigten Stellungen der Kupplungsringe 58 und 60 zugeordnet werden.

In der in Figur 10 gezeigten Stellung wirkt nur der Magnet 68 an dem ersten Kupplungsring 58 mit seiner Anziehungskraft auf den zweiten Kupplungsring 60 und hält die Kupplungsringe 58 und 60 zunächst aneinander. Die Kurve der addierten Anziehungskräfte der Magnete 68 und 78 entspricht somit im Abschnitt "Figur 10" des Diagramms gemäß Figur 19 nur der von dem Magnet 68 bereitgestellten Anziehungskraft, da das Magnet 78 mit seiner Magnetkraft noch nicht auf die Kupplungsringe 58 und 60 einwirkt.

Werden die Kupplungsringe 58 und 60 beim Übergang in die Freilaufstellung relativ zueinander verdreht, fällt die auf den zweiten Kupplungsring 60 wirkende Anziehungskraft des Magnets 68 ab.

In der in Figur 11 gezeigten Zwischenstellung sind die Kupplungsringe 58 und 60 derart relativ zueinander verdreht worden, dass auch das Magnet 78 mit einer relativ großen Anziehungskraft auf die Kupplungsringe 58 und 60 wirkt (siehe Bereich "Figur 11" in Figur 19). Dementsprechend ist auch die von beiden Magneten 68 und 78 bereitgestellte Anziehungskraft zunächst im Abschnitt "Figur 11" wieder relativ groß. Die Anziehungskraft der Magnete 68 und 78 fällt dann jedoch relativ stark ab, je weiter die Kupplungsringe 58 und 60 zueinander verdreht werden. Die Kupplungsringe 58 und 60 werden von beiden Magneten 68 und 78 aneinander gehalten, obwohl der erste Kupplungsring 58 in Figur 11 nach links verlagert wurde und sich an den Absatz 116 anlegt. Dadurch wird der Spalt s₂ (Figur 11) zwischen dem ersten Kupplungsring 58 und dem zweiten Kupplungsring 60 gebildet. Die Kupplungsringe 58 und 60 sind somit in axialer Richtung bereits teilweise getrennt (siehe Spalt s₂).

Werden die Kupplungsringe 58 und 60 weiter zueinander verdreht und damit der axiale Abstand (Spalt s₃) zwischen den beiden Kupplungsringen 58 und 60 vergrößert, verringert sich sowohl die Anziehungskraft des Magnets 68 als auch die Anziehungskraft des Magnets 78, wie in dem mit "Figur 12" gekennzeichneten Abschnitt des Diagramms gemäß Figur 19 erkennbar ist. Die Anziehungskräfte der Magnete 68 und 78 sinken entsprechend weiter bis die Kupplungsringe 58 und 60 eine vorbestimmte Winkelposition relativ zueinander erreichen. In dieser vorbestimmten Winkelposition der Kupplungsringe 58 und 60 sind die Kupplungsringe 58 und 60 auch vollständig in axialer Richtung getrennt. Dies entspricht dem in Figur 12 gezeigten Zustand. In Figur 12 wurde der Entkopplungsring 62 von der Anlagefläche 118 an der Führungshülse 74 abgehoben, so dass der Spalt s₃ zwischen den Kupplungsringen 58 und 60 gebildet wird. In Figur 12 sind die beiden Kupplungsringe vollständig voneinander getrennt. Damit befindet sich die Freilaufeinrichtung 52 in der Freilaufstellung.

Aus Figur 19 wird ersichtlich, dass sich die Anziehungskräfte der Magnete 68 und 78 in Abhängigkeit der Winkelpositionen der Kupplungsringe 58 und 60 relativ zueinander verändert.

Die Freilaufeinrichtung 52 gewährleistet hohe magnetische Anziehungskräfte, die die Kupplungsringe 58 und 60 aneinander halten, lässt aber gleichzeitig durch den starken Abfall der Anziehungskräfte der Magnete 68 und 78 (siehe Figur 19) bei sich verändernden Winkelpositionen der Kupplungsringe 58 und 60 eine schnelle Trennung der Kupplungsringe 58 und 60 zum Übergang in die Freilaufstellung zu.

Zu berücksichtigen hierbei gilt es, dass auch in der Freilaufstellung (Figur 12) in Abhängigkeit der Winkelpositionen der Kupplungsringe 58 und 60 relativ zueinander nahezu die in Figur 19 gezeigten hohen Anziehungskräfte auf den zweiten Kupplungsring 60 wirken, wobei die Anziehungskräfte aufgrund des axialen Abstands zwischen den Kupplungsringen in der Freilaufstellung etwas geringer als die dargestellten Anziehungskräfte sind. Durch diese relativen großen Anziehungskräfte wird erreicht, dass die Kupplungsringe 58 und 60 auch aus der Freilaufstellung schnell wieder zurück in die Eingriffsstellung überführt werden können, in der sie in drehmomentübertragenden Eingriff miteinander stehen. Anders ausgedrückt wirken in vorbestimmten Winkelpositionen der Kupplungsringe 58 und 60 relativ zueinander große Anziehungskräfte auf den zweiten Kupplungsring 60 und in anderen vorbestimmten Winkelpositionen geringere Anziehungskräfte. Dies wirkt sich bei einer kontinuierlichen Relativverdrehung der Kupplungsringe 58 und 60 in der Freilaufstellung derart aus, dass die in Figur 19 gezeigten Kurven oder ähnliche Kurven der Anziehungskräfte in großer Anzahl hintereinander auftreten, wenn sich die Kupplungsringe 58 und 60 in der Freilaufstellung zueinander verdrehen können.

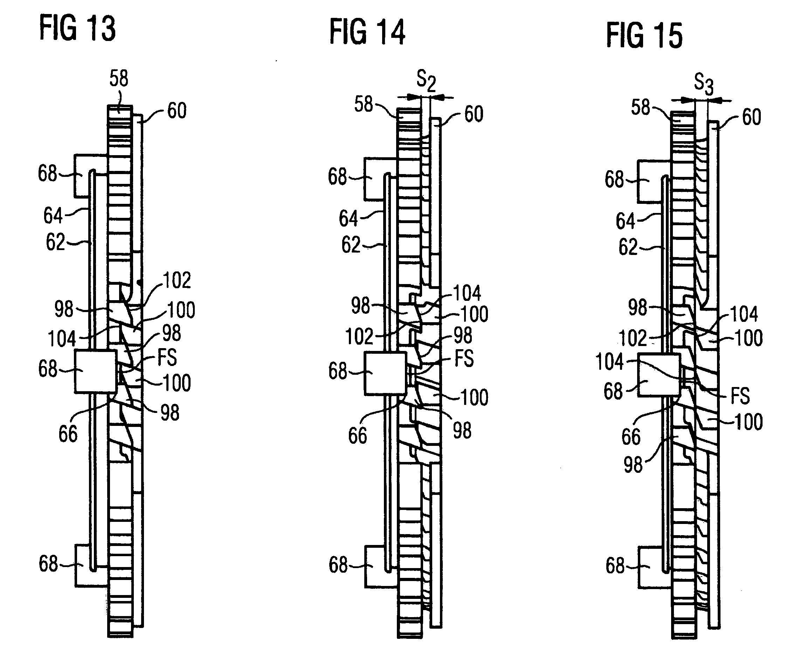

Die Figuren 13 bis 15 zeigen Ansichten des ersten Kupplungsrings 58 und des zweiten Kupplungsrings 60 mit dem Entkopplungsring 62 beim Übergang aus der Eingriffsstellung in die Freigabestellung. Die Stellungen der Kupplungsringe 58 und 60 in den Figuren 13 bis 15 entsprechen im Wesentlichen den in den Figuren 10 bis 12 gezeigten Stellungen der Freilaufeinrichtung 52.

In Figur 13 ist der erste Kupplungsring 58 mit den Magneten 68 erkennbar. Die Magnete 68 sind in Durchbrüchen 66 in dem ersten Kupplungsring 58 aufgenommen. Die Durchbrüche 66 sind in dem ersten Kupplungsring 58 zwischen zwei benachbarten Zähnen 98 ausgebildet. Die Zähne 98 des ersten Kupplungsrings 58 werden in ihrer Funktion durch die Durchbrüche 66 bzw. die Magnete 68 nicht beeinträchtigt.
Der zweite Kupplungsring 60 ist mit dem Entkopplungsring 62 verbunden. Der Entkopplungsring 62 weist einen umlaufenden Vorsprung 64 auf, der den ersten Kupplungsring 58 an der Einheit aus Entkopplungsring 62 und zweitem Kupplungsring 60 hält.

Die Zähne 98 des ersten Kupplungsrings 58 weisen eine Gleitfläche 102 auf. Die Zähne 100 des zweiten Kupplungsrings 60 weisen in ähnlicher Weise eine Gleitfläche 104 auf. In der in Figur 13 gezeigten Eingriffsstellung überspannt eine Gleitfläche 102, 104 eines Zahns 98 oder 100 im Wesentlichen den Zwischenraum zwischen zwei benachbarten Zähnen 98 oder 100. Ein Zahn 100 überspannt mit seiner Gleitfläche 104 dementsprechend auch den Flächenabschnitt FS des Magnets 68, der durch den Durchbruch 66 zwischen zwei benachbarten Zähnen 98 freigelegt wird. Anders ausgedrückt entspricht der von dem Durchbruch 66 freigelegte Flächenabschnitt FS des in dem Durchbruch 66 aufgenommenen Magnets 68 flächenmäßig im Wesentlichen der Gleitfläche 104 des Zahns 100 des zweiten Kupplungsrings 60.

Figur 14 zeigt eine Zwischenstellung zwischen der Eingriffsstellung und der Freilaufstellung.

Gemäß Figur 14 fand eine Relativbewegung in axialer Richtung und gleichzeitig eine Relativverdrehung zwischen dem ersten Kupplungsring 58 und dem zweiten Kupplungsring 60 statt. Dies geschieht beispielsweise dann, wenn sich die Nabenhülse 18 (Figur 1) mit dem ersten Kupplungsring 58 schneller dreht als die Antreiberhülse 24 (Figur 1) mit dem zweiten Kupplungsring 60. Anders ausgedrückt wird in den meisten Fällen, in denen die Freilaufnabe 10 in den Freilaufmodus übergeht, keine Kraft über den Kettentrieb auf die Antriebshülse 24 übertragen - der Kettentrieb steht still -, wobei sich die Nabenhülse mit dem ersten Kupplungsring 58 weiterhin dreht. Durch diese Relativverdrehung zwischen dem ersten Kupplungsring 58 und dem zweiten Kupplungsring 60 gleiten die Gleitflächen 102 und 104 der Zähne 98 und 100 aneinander ab. Durch die Neigung der Gleitflächen 102 und 104 werden die Kupplungsringe 58 und 60 bei einer entsprechenden Relativverdrehung und dem Abgleiten der Gleitflächen 102 und 104 aneinander in axialer Richtung separiert. Der sich vergrößernde axiale Abstand zwischen dem ersten Kupplungsring 58 und dem zweiten Kupplungsring 60 ist in Figur 14 wiederum durch s₂ gekennzeichnet. In der in Figur 14 gezeigten Stellung befindet sich kein Zahn 100 des zweiten Kupplungsrings 60 in axialer Richtung vor dem Flächenabschnitt FS des Magnets 68. Die von dem Magnet 68 in dem ersten Kupplungsring 58 auf den zweiten Kupplungsring 60 ausgeübte magnetische Anziehungskraft ist dementsprechend gering. Befindet sich ein Zahn 100 mit seiner Gleitfläche 104 unmittelbar vor dem Flächenabschnitt FS ist die auf den Zahn 100 ausgeübte magnetische Anziehungskraft des Magnets 68 relativ groß. Daraus wird ersichtlich, dass die von dem Magneten 68 in dem ersten Kupplungsring 58 auf den zweiten Kupplungsring 60 ausgeübte magnetische Anziehungskraft sich in Abhängigkeit der Winkelpositionen des ersten Kupplungsrings 58 und des zweiten Kupplungsrings 60 relativ zueinander verändert. Dies liegt darin begründet, dass die Feldlinien des Magnetfelds der Magnete 68 nur aus dem Flächenabschnitt FS ungehindert in Richtung des zweiten Kupplungsrings 60 austreten können. In allen anderen Bereichen muss sich das Magnetfeld zunächst durch die benachbarten Zähne 98 des Kupplungsrings 58 ausbreiten und ist dementsprechend schwächer.

Figur 15 zeigt den ersten Kupplungsring 58 und den zweiten Kupplungsring 60 in der Freilaufstellung. Der Abstand s₃ zwischen dem ersten Kupplungsring 58 und dem zweiten Kupplungsring 60 hat sich verglichen mit dem Abstand s₂ gemäß Figur 14 weiter vergrößert. Der erste Kupplungsring 58 liegt nahezu an dem radialen Vorsprung 64 des Entkopplungsrings 62 an. Die Gleitflächen 102 und 104 sind weiter aneinander abgeglitten, wodurch der erste Kupplungsring 58 und der zweite Kupplungsring 60 in axialer Richtung weiter voneinander beabstandet sind (siehe s₃). In Figur 15 wird erkennbar, dass sich ein Zahn 100 des zweiten Kupplungsrings 60, wenngleich in axialer Richtung voneinander beabstandet, in axialer Richtung vor dem Flächenabschnitt FS des Magnets 68 befindet. In dieser Stellung der Kupplungsringe 58 und 60 ist die von dem Magnet 68 auf den Zahn 100 ausgeübte magnetische Anziehungskraft wiederum sehr groß, da der Zahn 100 bzw. seine Gleitfläche 104 mit dem Flächenabschnitt FS des Magnets 68, der von dem Durchbruch 66 freigelegt wird, nahezu vollständig überlappt. In diesem Fall kann das Magnetfeld aus dem Flächenabschnitt FS unmittelbar auf den Zahn 100 des zweiten Kupplungsrings 60 wirken.

Dies hat den Vorteil, dass der Übergang aus der in Figur 15 gezeigten Freilaufstellung in die in Figur 13 gezeigte Eingriffsstellung aufgrund der hohen von den Magneten 68 auf die Zähne 100 des zweiten Kupplungsrings 60 ausgeübten Anziehungskraft schnell ablaufen kann. Bei einer Relativverdrehung zwischen dem ersten Kupplungsring 58 und dem zweiten Kupplungsring 60 kann die auf den zweiten Kupplungsring 60 wirkende Anziehungskraft der Magnete 68 quasi an- und ausgeschalten werden. Wie voranstehend ausgeführt wurde, liegt dies darin begründet, dass sich das Magnetfeld durch die verschiedenen Winkelpositionen des ersten Kupplungsrings 58 relativ zu dem zweiten Kupplungsrings 60 verändern kann. In der in Figur 15 gezeigten Winkelposition der Kupplungsringe 58 und 60 wirkt eine große Anziehungskraft auf den Zahn 100 des zweiten Kupplungsring, da der Zahn 100 vollständig mit dem Flächenabschnitt FS überlappt und das Magnetfeld direkt auf den Zahn 100 wirken kann. Durch die in dieser Winkelposition starke Anziehungskraft wird bei einer Relativverdrehung in entgegengesetzter Richtung zwischen dem ersten Kupplungsring 58 und dem zweiten Kupplungsring 60 sichergestellt, dass der axiale Abstand zwischen dem ersten Kupplungsring 58 und dem zweiten Kupplungsring 60 geschlossen wird und die Zähne 98 und 100 schnell und zuverlässig miteinander in Eingriff gelangen.

Betrachtet man die Figuren 13 bis 15 in umgekehrter Reihenfolge, zeigen die Figuren 13 bis 15 auch den Übergang aus der Freilaufstellung gemäß Figur 15 in die Ein- , griffsstellung gemäß Figur 13. Anders ausgedrückt werden bei einer umgekehrten Relativverdrehung die Kupplungsringe 58 und 60 durch die Magnete 68 aneinander gezogen. Die Gleitflächen 102 und 104 der Zähne 98 und 100 gleiten aneinander ab und bis sie sich in vollständigen und drehmomentübertragenden Eingriff befinden.

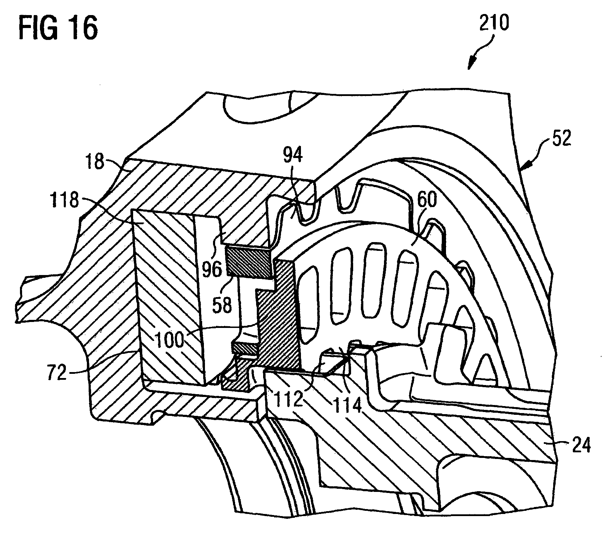

Figur 16 zeigt eine teilweise aufgebrochene perspektivische Ansicht einer Freilaufnabe 210 gemäß einer zweiten Ausführungsform der Erfindung.

Für gleichartige oder gleichwirkende Komponenten werden dieselben Bezugszeichen wie bei der ersten Ausführungsform verwendet.

Die Freilaufnabe 210 weist eine Nabenhülse 18 und eine Antreiberhülse 24 auf. Zwischen der Nabenhülse 18 und der Antreiberhülse 24 ist die Freilaufeinrichtung 52 vorgesehen. Die Freilaufeinrichtung 52 umfasst den ersten Kupplungsring 58 und den zweiten Kupplungsring 60. Die Antreiberhülse 24 steht über ihre Radialverzahnung 112 mit der Radialverzahnung 114 des zweiten Kupplungsrings 60 in drehmomentübertragenden Eingriff. Gleiches gilt für die Nabenhülse 18 und den ersten Kupplungsring 58. Die Nabenhülse 18 weist eine nach radial innen weisende Radialverzahnung 96 auf, die in drehmomentübertragenden Eingriff mit der nach radial außen weisenden Radialverzahnung 94 des ersten Kupplungsrings 58 steht.

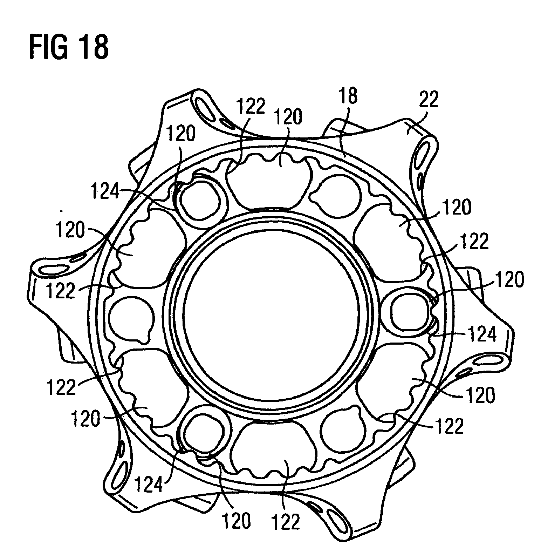

Die Nabenhülse 18 weist ferner Ausnehmungen 72 auf. In den Ausnehmungen 72 ist in Figur 18 ein schallreduzierendes Element 120 aufgenommen. Die schallreduzierenden Elemente 120 können schallabsorbierende Elemente oder schalldämpfende Elemente sein. Die schallabsorbierenden Elemente 120 können einfach in die Ausnehmung 72 eingepresst werden.

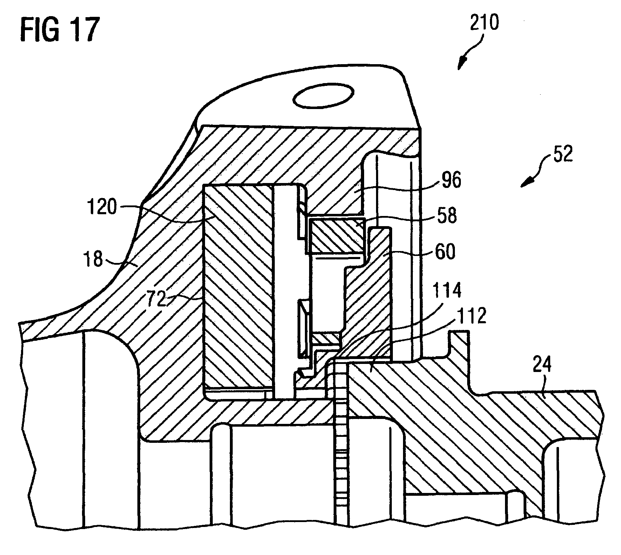

Figur 17 zeigt eine Schnittansicht der Freilaufnabe 210. In der Ansicht gemäß Figur 17 ist erneut das schallabsorbierende bzw. schalldämpfende Element 120 erkennbar, das in der Ausnehmung 72 in der Nabenhülse 18 aufgenommen ist. Das Element 120 zur Schalldämpfung bzw. zur Schallabsorption befindet sich in unmittelbarer Nähe des ersten Kupplungsrings 58 und des zweiten Kupplungsrings 60, die bei der Überführung aus der Freilaufstellung in die Eingriffsstellung unangenehme Geräusche von sich geben können. Diese Geräusche werden von dem schallabsorbierenden bzw. schalldämpfenden Element 120 absorbiert bzw. gedämpft und dringen so nicht nach außen um den Fahrer und seine Umgebung störend zu beeinflussen.

Figur 18 zeigt eine Vorderansicht einer Nabenhülse 18 mit dem daran vorgesehenen Speichenflansch 22. Die Nabenhülse 18 weist verschiedene Ausnehmungen 122 und 124 auf. Die Ausnehmungen 122 sind oval ausgebildet. Die Ausnehmungen 124 sind ringförmig ausgebildet. In die Ausnehmungen 122 und 124 werden schallabsorbierende bzw. schalldämpfende Elemente 120 eingepresst, die an die Form der jeweiligen Ausnehmung angepasst sind.

## Patentansprüche

1. Nabe (10) für ein Fahrrad umfassend:
eine Nabenachse (12),
eine Nabenhülse (18), die über eine Lageranordnung (14, 16) drehbar auf der Nabenachse (12) gelagert ist,
einen Antreiber (24), der drehbar über eine Lageranordnung (26, 28) auf der Nabenachse (12) gelagert und mit der wenigstens einen Nabenhülse (18) drehmomentübertragend koppelbar ist, wobei die Lageranordnung (26, 28) wenigstens ein axial inneres Lager (26) und wenigstens ein axial äußeres Lager (28) aufweist,
**dadurch gekennzeichnet, dass** wenigstens ein Befestigungselement (38) vorgesehen ist, das durch eine lokale oder abschnittsweise Vergrößerung des Querschnitts der Nabenachse (12) wenigstens das innere Lager (26) der Lageranordnung (26, 28) in seiner vorbestimmten Position (LS₃) der Nabenachse (12) festlegt.

2. Nabe (10) nach Anspruch 1,
wobei das wenigstens eine Befestigungselement (38) eine Presspassung zwischen der Nabenachse (12) und dem wenigstens einen inneren Lager (26) erzeugt.

3. Nabe (10) nach Anspruch 1 oder 2,
wobei das wenigstens eine Befestigungselement (38) derart ausgebildet ist, dass es eine entlang der Nabenachse (12) wirkende Kraft in eine radiale Vergrößerung des Querschnitts der wenigstens einen Nabenachse (12) umsetzt.

4. Nabe (10) nach einem der Ansprüche 1 bis 3,
wobei das wenigstens eine Befestigungselement (38) in axialer Richtung bewegbar in der Nabenachse (12) aufgenommen ist..

5. Nabe (10) nach einem der Ansprüche 1 bis 4,
wobei das wenigstens eine Befestigungselement (38) derart ausgebildet ist, dass es über wenigstens ein Verschlusselement (40) in axialer Richtung in der Nabenachse (12) verspannbar ist.

6. Nabe (10) nach einem der Ansprüche 1 bis 5,
wobei die Nabenachse (12) an wenigstens einem Abschnitt ihrer Innenumfangsfläche eine vorbestimmte Kontur (44) aufweist, die mit dem wenigstens einen Befestigungselement (38) zusammenwirkt.

7. Nabe (10) nach Anspruch 6,
wobei das wenigstens eine Befestigungselement (38) wenigstens einen Abschnitt (48) aufweist, der korrespondierend zu der Kontur (44) an der Innenumfangsfläche der Nabenachse (12) ausgebildet ist.

8. Nabe (10) nach Anspruch 7,
wobei der zu der Kontur (44) an der Innenumfangsfläche korrespondierende wenigstens eine Abschnitt (48) des Befestigungselements (38) eine geneigte Anlagefläche (50) aufweist.

9. Nabe (10) nach einem der Ansprüche 6 bis 8,
wobei die vorbestimmte Kontur ein nach radial innen vorstehender Vorsprung (44) mit einer geneigten Gegenanlagefläche (46) ist.

10. Nabe nach Anspruch 8 oder 9,
wobei der Abschnitt (48) mit der geneigten Anlagefläche (50) eine vergrößerte Wandstärke aufweist.

11. Nabe nach einem der Ansprüche 1 bis 10,
wobei das wenigstens eine Befestigungselement (38) derart ausgebildet ist, dass im unverspannten Zustand um einen vorbestimmten Abschnitt (90) aus der Nabenachse (12) herausragt.

12. Nabe nach einem der Ansprüche 1 bis 11,
wobei das Befestigungselement (38) wenigstens eine Kante (88) aufweist, die zum Vergrößern des Querschnitts der Nabenachse (12) vorgesehen ist.

13. Nabe nach einem der Ansprüche 1 bis 12,
wobei zwischen der wenigstens einen Nabenhülse (18) und dem Antreiber (24) wenigstens eine Freilaufeinrichtung (52) mit einem mit der Nabenhülse (18) gekoppelten ersten Kupplungsring (58) und einem mit dem Antreiber (24) gekoppelten zweiten Kupplungsring (60) vorgesehen ist.
